Europäisches Patentamt

European Patent Office

Office européen des brevets

(19)

(11) Veröffentlichungsnummer: **0 443 570 A1**

(12) # EUROPÄISCHE PATENTANMELDUNG

(21) Anmeldenummer: 91102517.9

(22) Anmeldetag: 21.02.91

(51) Int. Cl.5: **B60J 5/08**

(30) Priorität: 23.02.90 DE 4005738
10.01.91 DE 4100482

(43) Veröffentlichungstag der Anmeldung:
**28.08.91 Patentblatt 91/35**

(84) Benannte Vertragsstaaten:
**AT DE FR IT**

(71) Anmelder: **Iveco Magirus Aktiengesellschaft
Schillerstrasse 2 Postfach 27 40
W-7900 Ulm/Donau(DE)**

(72) Erfinder: **Eickhoff, Hans
Maiweg 6
W-7913 Senden(DE)**
Erfinder: **Arlt, Andreas
Hans-Acker-Weg 1
W-7900 Ulm(DE)**

(74) Vertreter: **Socha, Peter, Dipl.-Ing.
Iveco Magirus AG Patentabteilung Postfach
27 40 Schillerstrasse 2
W-7900 Ulm(DE)**

(54) **Rolladen für ein Nutzfahrzeug, insbesondere Brandschutzfahrzeug.**

(57)
1. Rolladen für ein Nutzfahrzeug, insbesondere Brandschutzfahrzeug.

2.1. Bekannte Rolläden von Brandschutzfahrzeugen weisen Rechteckform auf und überdecken einen Geräteaufbau in deutlichem Abstand hinter dem Fahrerhaus aufgrund des Hindernisses des unteren vorderen Vorderradkotflügels. Wird der Geräteaufbau bzw. der Rolladen näher an das Fahrerhaus herangerückt, so kann der Kotflügelbereich nicht mehr als Rolladen, vielmehr als breite Griffleiste ausgestaltet werden.

2.2. Erfindungsgemäß wird ein Rolladen (1) für einen Geräteaufbau (4) in dichter Anordnung hinter dem Fahrerhaus insbesondere eines Brandschutzfahrzeuges (2) vorgeschlagen, wobei der Rolladen (1) eine seitliche untere Aussparung besitzt, welche in etwa dem Kotflügel eines Fahrzeugrades angepaßt ist. Die dortigen Einzellamellen (7) des Rolladens (1) sind in Längsrichtung zueinander durch Fixierungsmittel wie Stifte, Schrauben oder einen eingelassenen Stahldraht (8) fixiert. Auch kann eine Querfixierung insbesondere der Griffleiste (9) vorgesehen sein. Ein derartiger Rolladen (1) ist auch im halbgeöffneten Zustand ausreichend fixiert.

EP 0 443 570 A1

Fig.1

Die Erfindung betrifft einen Rolladen für ein Nutzfahrzeug, insbesondere für den fahrerhaushinterseitigen Geräteaufbau eines Brandschutzfahrzeuges, mit einer Aussparung im Rolladen-Endbereich.

Bei verschiedenen Feuerwehrfahrzeugen mit Geräteaufbau befindet sich hinter dem Fahrerhaus zwischen Fahrerhaus und Geräteaufbau ein relativ großer räumlicher Abstand, der nicht genutzt wird und in vielen Fällen auch sehr unschön aussieht. Wünschenswert wäre es, auch diesen Raum noch zu nutzen, den Geräteaufbau also nach vorn zu verlängern. Wegen der Rolladenführung, die heutzutage üblicherweise exakt senkrecht ist, würde die Verlängerung nach vorn nochmals einen zusätzlichen sehr schmalen Rolladen bedeuten. Wünschenswert wäre es, wenn man den gesamten Geräteaufbau inklusive der Rolladenlamellen nach vorn verlängert. Wegen des Kotflügels kommt es aber dann entweder zu einer abgesetzten Ausführung bzw. einer schrägen Ausführung der Rolladenlamellen oder zu einer angepaßten Abdeckung bzw. einer breiten unteren "Griffleiste", welche die gesamte Abschrägung bzw. Absetzung überdeckt (GB-PS 1167209, GB-PS 1275551).

Bei einer breiten Griffleiste ist es nachteilig, daß der Rolladen nicht vollständig nach oben geschoben bzw. aufgewickelt werden kann. Bei abgeschrägten oder abgesetzten Rolladen verlieren die Rolladenlamellen und die untere (schmale) Griffleiste bei teilweiser Öffnung des Rolladens ihre Führung, weil dann die der Absetzung bzw. Abschrägung zugeordneten kürzeren Rolladenlamellen nicht mehr in die U-Profile der senkrechten fahrzeugfesten Führungssäulen hineinreichen.

Aufgabe der Erfindung ist die Schaffung eines eine untere Aussparung enthaltenden Rolladens der eingangs genannten Art, welcher einfach aufgebaut ist und auch bei teilweiser Öffnung des Rolladens hinlänglich geführt ist.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 12.

Gemäß der Erfindung wird das gegenseitige Verschieben der Lamellen dadurch verhindert, daß zumindest im Bereich der Aussparung, d.h. des Absatzes oder der Abschrägung, die Lamellen durch einfach aufgebaute Fixierungsmittel längsfixiert sind.

Insbesondere ist zumindest ein in die Lamellen eingezogener (Stahl-)Draht vorgesehen, durch den die Lamellen gesichert werden. Der Draht ist vorzugsweise an den äußersten Rolladenlamellen bzw. an der wickelnahen Endleiste und an der wickelfernen Griffleiste des Rolladens befestigt und erstreckt sich im wesentlichen senkrecht durch die einzelnen Lamellen.

Alternativ können die Längsfixierungsmittel der Lamellen in die Lamellenflachlängsseite eingelassene Stifte oder (Maden-)Schrauben sein, die in entsprechende Aussparungen in der zugewandten Flachlängsseite der benachbarten Lamelle längsfixierend eingreifen. Die Stifte (grundsätzlich bei Schragrolläden zur Vertikalabstützung von Kurzlamellen aus DE-OS 3 725 380 bekannt), Schrauben oder der vorgenannte Stahldraht befinden sich vorzugsweise etwa in Höhe des freien Endes der kürzesten Einzellamelle oder Griffleiste im Bereich der Absetzung bzw. Abschrägung.

Der Rolladen wird also bei nicht vollständig geschlossener Endstellung durch die fahrzeugfesten vorzugsweise senkrechten Führungssäulen gesichert, und zwar im Bereich der gleichlangen Rolladenlamellen, welche nicht der Absetzung oder Abschrägung zugeordnet sind. Die der Absetzung oder Abschrägung zugeordneten im wesentlichen gleich breiten Einzellamellen werden im teilweise geöffneten Zustand des Rolladens auf einer Seite durch eine fahrzeugfeste Führungssäule geführt und auf der Absetzungs- bzw. Abschrägungs- oder Abrundungsseite durch vorgenannte Stifte, Schrauben, Stahldraht gesichert, so daß sich die Lamellen nicht gegenseitig verschieben können.

Eine vorteilhafte Weiterbildung der Erfindung sieht vor, daß im Bereich der Aussparung bzw. Absetzung oder Abschrägung des Rolladens zumindest an der Griffleiste des Rolladens ein zur Fahrzeuginnenseite weisendes T-förmiges Gleitteil befestigt ist, welches in einer zugeordneten fahrzeugfesten Führungsleiste bei einem Öffnen und Schließen des Rolladens verschieblich geführt ist. Dadurch wird ein Schwenken der freien Lamellen nach außen und innen im teilgeöffneten Zustand verhindert.

Die fahrzeugfeste Führungsleiste ist vorzugsweise im Bereich der Seite einer vertikalen Querwand des Geräteaufbaus angeordnet, d.h. in einem fahrzeugfesten Bereich, der bei geöffnetem Rolladen den Zugriff ins Gerätebauinnere nicht beeinträchtigt.

Neben der Griffleiste können auch die benachbarten, der Absetzung bzw. Abschrägung zugeordneten Lamellen mit T-förmigen Gleitteilen ausgestattet sein. Die Gleitteile sorgen sowohl für eine Längsfixierung der Einzellamellen als auch eine Querfixierung und ermöglichen ausschließlich eine Verschiebung des Rolladens in Öffnungs- und Schließrichtung. Aus diesem Grunde kann bei letztgenannter Ausführungsvariante auf den Stahldraht, die Stifte oder Schrauben als Längsfixierungsmittel verzichtet werden.

Eine alternative Ausgestaltung von Längs- und Querfixierungsmitteln des Rolladens sieht vor, daß umgekehrt am Fahrzeug eine im Querschnitt T-förmige oder schwalbenschwanzförmige Führungsschiene vorgesehen ist, welche mit einer entsprechenden Aussparung zumindest in der Griffleiste verschieblich eingreift. Auch die der Griffleiste benachbarten Rolladenlamellen können eine derartige Aussparung besitzen. Ein Rolladen dieser Konfiguration ermöglicht bei einem Öffnen in jedem Fall ein störungsfreies Aufwickeln auf der vorzugsweise fahrzeugoberseitig im Geräteaufbau angeordneten Rolladen-Wickelvorrichtung.

Insbesondere ist ein eine Abschrägung, eine Abrundung oder eine Absetzung enthaltender einziger Rolladen vorgesehen, dessen im wesentlichen gleich aufgebauten Lamellen im wesentlichen gleiche Breite, jedoch unterschiedliche Länge besitzen, wobei die Längsenden der längsten Lamellen in fahrzeugfesten Schienen verschieblich geführt sind. Der Rolladen befindet sich zumindest auf einer Fahrzeugseite direkt hinter dem Fahrerhaus oder über der Hinterachse und ist als Vertikalwand eines Geräteaufbaus vertikalverschieblich. Die Aussparung des Rolladens liegt hierbei im Bereich des Fahrzeugvorder- oder -hinterrads und ist zweckmäßigerweise der Außenkonfiguration des Kotflügels angepaßt.

Ersichtlich kann durch die Erfindung ein Rolladen einfach und kostengünstig hergestellt und optimal dem Geräteaufbau insbesondere eines Brandschutzfahrzeugs angepaßt werden. Der Geräteaufbau, der bis hin zur Hinterseite des Fahrerhauses ausgebildet sein kann, erhält mithin einen höheren Nutzungsgrad. Das äußere optische Erscheinungsbild des Fahrzeugs ist verbessert.

Die Erfindung wird nachfolgend anhand von Ausführungsbeispielen unter Bezugnahme auf beigefügte Zeichnung näher erläutert; es zeigen:

Fig. 1    ein Brandschutzfahrzeug mit einem Geräteaufbau in schematischer Teilseitenansicht,

Fig. 2    ein Brandschutzfahrzeug ähnlich Fig. 1 mit einem anderen Geräteaufbau,

Fig. 3    einen schematischen Querschnitt durch den Rolladen des Geräteaufbaus nach Fig. 2, und

Fig. 4    ein Brandschutzfahrzeug ähnlich Fig. 1 mit einem weiteren Geräteaufbau im Bereich der Fahrzeughinterachse.

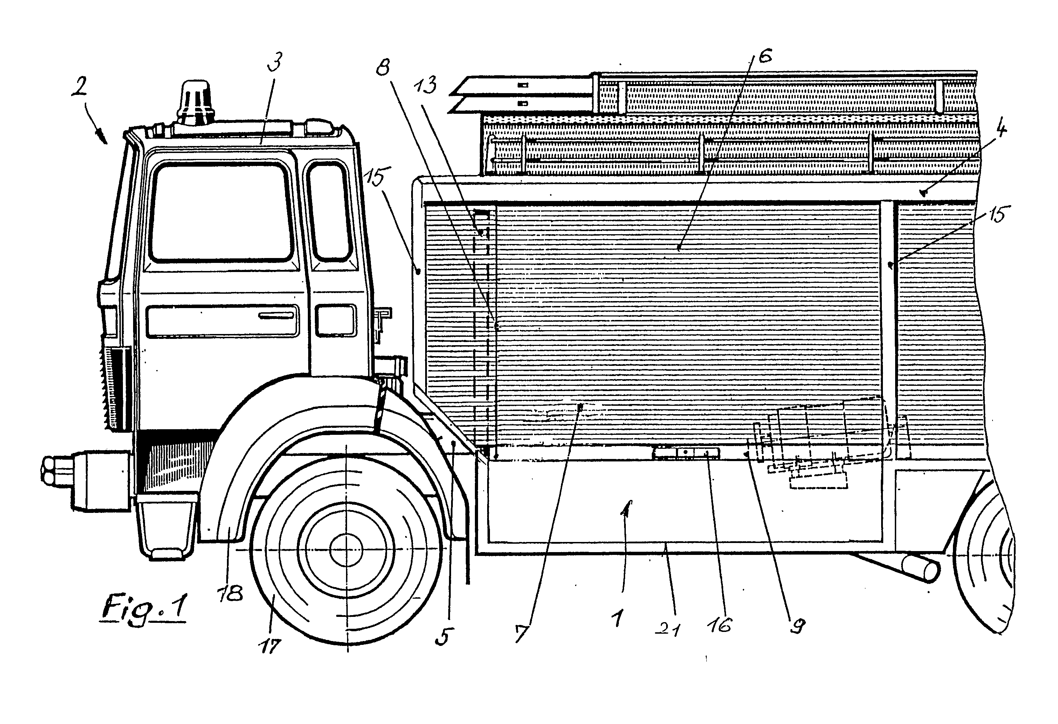

In Fig. 1 ist ein Brandschutzfahrzeug (2) mit einem Fahrerhaus (3) und einem hinter dem Fahrerhaus angeordneten Geräteaufbau (4) gezeigt, welcher an den vertikalen Fahrzeugseitenwänden Rolläden (1) besitzt, durch die der Geräteaufbau (4) vollständig geschlossen und durch Hochschieben der Rolläden (1) geöffnet werden kann.

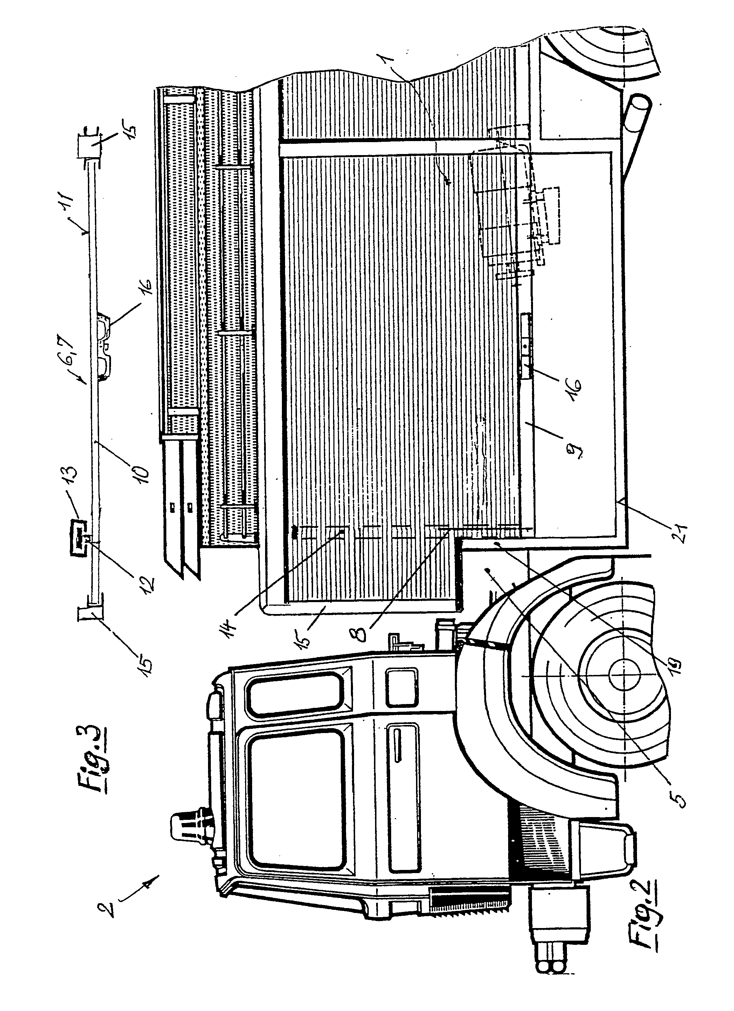

Der Geräteaufbau (4) schließt sich unmittelbar hinter dem Fahrerhaus (3) des Brandschutzfahrzeuges (2) an, und es besitzen die beiden seitlichen, dem Fahrerhaus (3) zugewandten Rolläden (1) im Bereich des Fahrzeugvorderrades (17) bzw. des dortigen zugeordneten Kotflügels (18) eine Aussparung (5) in Form einer geradlinigen Abschrägung. Die Aussparung (5) ist in etwa der Kontur des Kotflügels (18) angepaßt und kann alternativ eine Abrundung oder eine Absetzung gemäß Ausführungsbeispiel der Fig. 2 sein. Die dem Fahrerhaus (3) zugewandten beiden seitlichen Rolläden (1) besitzen mithin eine Vielzahl von Rolladenlamellen (6), welche im wesentlichen gleich breit und gleich lang ausgebildet sind und in vertikalen fahrzeugfesten Schienen (15) in Höhenrichtung verschieblich geführt sind. Ferner weisen die beiden vorgenannten Rolläden (1) im Bereich der unteren Aussparung (5) entsprechend der Konfiguration der Aussparung (5) kürzere Lamellen (7) auf, welche ausschließlich auf der Fahrzeughinterseite durch die dortige fahrerhausfeste Schiene (15) geführt sind. Im Bereich der vorderen Aussparung (5) greifen die dortigen Längsenden der kürzeren Lamellen (7) im vollständig geschlossenen Zustand des Rolladens (1) in eine fahrzeugfeste schräge Schiene gemäß Ausführungsbeispiel der Fig. 1 bzw. in eine in Fahrzeuglängsrichtung versetzte weitere vertikale fahrzeugfeste Schiene (19) ein.

Um letztgenannte kürzeren Lamellen (7) des Rolladens (1) auch im teilweise geöffneten Zustand gegenseitig nicht verschieben zu können, sind gemäß Fig. 1 im Bereich der Abschrägung bzw. gemäß Fig. 2 im Bereich des Absatzes die Lamellen durch einen eingezogenen Stahldraht (8) gesichert, welcher sich in Vertikalrichtung durch sämtliche Lamellen (6, 7) des Rolladens (1) erstreckt und an der unteren Griffleiste (9) und an der obersten Rolladenlamelle befestigt ist.

Der Stahldraht (8) kann auch durch andere Längsfixierungsmittel ersetzt sein, beispielsweise durch (nicht veranschaulichte) vertikale in der Flachlängsseite (10) einer Lamelle eingelassene Stifte, welche in entsprechende Aussparungen der Gegenlamelle eingreifen. Die Aussparung ist vorzugsweise ein Langloch. Die einzelnen Stifte können auch durch Madenschrauben ersetzt sein.

Um bei halbgeöffnetem Rolladen (1) auch ein Schwenken der freien kürzeren Lamellen (7) nach außen und nach innen bezüglich des Fahrzeugs zu verhindern, ist hinter dem Rolladen auf der Fahrzeuginnenseite (11) eine zusätzliche fahrzeugfeste Führungsleiste (13) vorgesehen, welche sich senkrecht zwischen den beiden äußersten fahrzeugfesten Schienen (15) angeordnet ist. Die Führungsleiste (13) befindet sich vorzugsweise an der seitlichen Stirnseite einer Querwand (14) des Geräteaufbaus (4). In die Führungsleiste (13) greift zumindest ein T-förmiges Führungs- oder Gleitteil (12) ein, welches an einer oder mehreren der kürzeren Lamellen (7) des Rolladens (1) fahrzeuginnenseitig befestigt ist, wie dies insbesondere der Fig. 3 schematisch zu entnehmen ist. Ein derartiges Gleitteil (12) kann an sämtlichen Lamellen des Rolladens (1) vorgesehen sein und den Stahldraht (8) der erstgenannten Ausführungsvariante ersetzen. Ersichtlich sorgt das T-förmige Gleitteil (12) für eine zweidimensionale Führung und gestattet lediglich eine Senkrechtverschiebung des Rolladens (1). Ersichtlich ist mithin ein derartiger Rolladen (1) auch im halbgeöffneten Zustand sowohl in Längsrichtung der Lamellen als auch in Querrichtung hinlänglich fixiert. Der Rolladen (1)kann sich auch bis zur untersten horizontalen Fahrzeugkante (21) des Aufbaus erstrecken. Eine besonders einfach aufgebaute zweidimensional geführte Ausführungsvariante eines Rolladens (1) sieht vor, daß nur die unterste Griffleiste (9) ein vorgenanntes T-förmiges Gleitteil (12) besitzt und die zugeordnete Führungsleiste (13) eine entsprechende Ω -Aussparung aufweist.

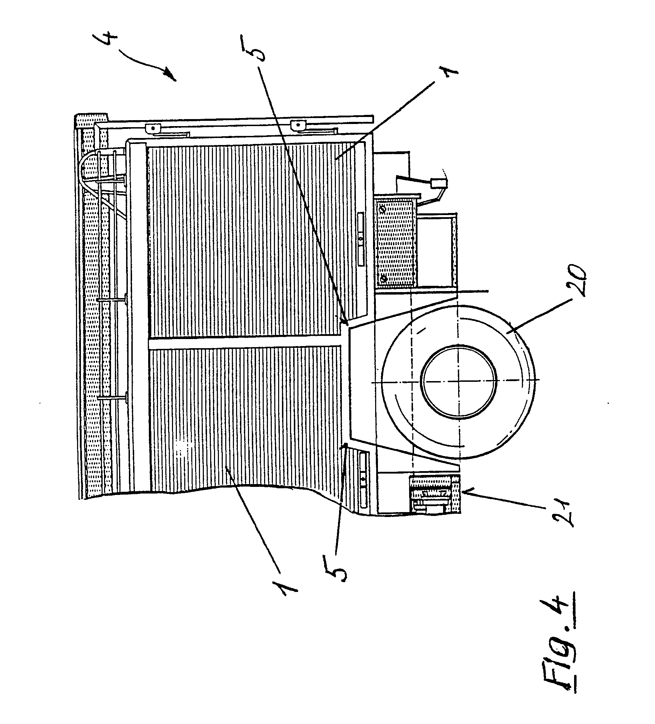

Der in Fig. 4 in einer Teilseitenansicht veranschaulichte Geräteaufbau (4) sieht im Bereich des Fahrzeughinterrads (20) Rolläden (1) vor, welche eine Aussparung (5) im unteren Rolladen-Endbereich besitzen. Die Rolladen-Aussparung (5) liegt hierbei im Bereich des Fahrzeughinterrads (20) bzw. im Bereich des dortigen Kotflügels und ist insbesondere letzterem angepaßt. Auch die hinteren Rolläden des Fahrzeugs können bis an die untere Fahrzeugkante (21) gezogen sein.

Sämtliche in der Beschreibung erwähnten und in der Zeichnung dargestellten neuen Merkmale allein oder in sinnvoller Kombination sind erfindungswesentlich, auch soweit sie in den Ansprüchen nicht ausdrücklich beansprucht sind.

**Patentansprüche**

1. Rolladen (1) für ein Nutzfahrzeug, insbesondere für den fahrerhaushinterseitigen Geräteaufbau (4) eines Brandschutzfahrzeuges (2), mit einer Aussparung (5) im Rolladen-Endbereich, dadurch gekennzeichnet, daß im Bereich der Rolladen-Aussparung (5) im wesentlichen gleich breite Rolladen-Lamellen (7) vorgesehen sind, die durch Fixierungsmittel relativ zueinander in Lamellenlängsrichtung fixiert sind.

2. Rolladen nach Anspruch 1, dadurch gekennzeichnet, daß die Fixierungsmittel zumindest einen in die Lamellen (7) eingezogenen Draht (8) umfassen.

3. Rolladen nach Anspruch 2, dadurch gekennzeichnet, daß der Draht (8) durch sämtliche Lamellen (6, 7) des Rolladens (1) im wesentlichen senkrecht zur Längserstreckung der Lamellen gezogen und an den endseitigen Lamellen bzw. an der wickelnahen Endleiste und an der wickelfernen Griffleiste (9) befestigt ist.

4. Rolladen nach Anspruch 1, dadurch gekennzeichnet, daß die Fixierungsmittel in die Flachlängsseite (10) der Lamellen eingelassene Stifte oder (10) Schrauben sind, die in entsprechende Aussparungen in der zugewandten Flachlängsseite der benachbarten Lamelle längsfixierend eingreifen.

5. Rolladen nach einem der Ansprüche 1 bis 4, dadurch gekennzeichnet, daß die Fixierungsmittel in Höhe des Bereichs des der Aussparung (5) zugewandten freien Längsendes der kürzesten Einzellamelle (7) vorgesehen sind.

6. Rolladen nach einem der Ansprüche 1 bis 5, dadurch gekennzeichnet, daß im Bereich der Aussparung (5) zumindest an der Griffleiste (9) des Rolladens (1) ein zur Fahrzeuginnenseite (1l) weisendes T-förmiges Gleitteil (12) befestigt ist, welches in einer zugeordneten fahrzeugfesten Führungsleiste (13) bei einem Öffnen und Schließen des Rolladens verschieblich geführt ist.

7. Rolladen nach Anspruch 6, dadurch gekennzeichnet, daß die fahrzeugfeste Führungsleiste (13) im Bereich der Seite einer vertikalen Querwand (14) des Geräteaufbaus (4) angeordnet ist.

8. Rolladen nach Anspruch 5,
dadurch gekennzeichnet,
daß im Bereich der Aussparung (5) eine fahrzeugfeste im Querschnitt T-förmige oder schwalbenschwanzförmige Führungsschiene vorgesehen ist, welcher eine entsprechende fahrzeuginnenseitige Aussparung zumindest in der Griffleiste (9) des Rolladens in einem verschieblichen Führungseingriff zugeordnet ist.

9. Rolladen nach einem der Ansprüche 1 bis 8,
dadurch gekennzeichnet,
daß die Rolladen-Aussparung (5) eine Abschrägung, eine Abrundung oder eine Absetzung eines einzigen Rolladens (1) ist, der im wesentlichen gleich aufgebaute Lamellen mit gleicher Breite, jedoch unterschiedlicher Länge besitzt, wobei die Längsenden der längsten Lamellen (6) in fahrzeugfesten Schienen (15) verschieblich geführt sind.

10. Rolladen nach einem der Ansprüche 1 bis 9,
dadurch gekennzeichnet,
daß er zumindest auf einer Fahrzeugseite direkt hinter dem Fahrerhaus (3) angeordnet und als Vertikalwand eines Geräteaufbaus (4) vertikalverschieblich ist, wobei die Aussparung (5) des Rolladens im Bereich des Fahrzeugvorderrads (17) bzw. des Vorderradkotflügels (18) liegt und insbesondere letzterem angepaßt ist.

11. Rolladen nach einem der Ansprüche 1 bis 9,
dadurch gekennzeichnet,
daß er zumindest auf einer Fahrzeugseite im Bereich eines Fahrzeughinterrads (20) angeordnet und als Vertikalwand eines Geräteaufbaus (4) vertikal verschieblich ist, wobei die Aussparung (5) des Rolladens im Bereich des Fahrzeughinterrads (20) bzw. des Hinterradkotflügels liegt und insbesondere letzterem angepaßt ist.

12. Rolladen nach einem der Ansprüche 1 bis 11,
dadurch gekennzeichnet,
daß fahrzeugoberseitig eine geräteaufbauinnere Rolladen-Aufwickelvorrichtung vorgesehen ist.

Fig.1

EP 0 443 570 A1

Fig.3

Fig.2

Fig. 4

| | | |
|---|---|---|
| **Europäisches Patentamt** | **EUROPÄISCHER RECHERCHENBERICHT** | Nummer der Anmeldung<br><br>**EP 91 10 2517** |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y,A | GB-A-1 275 551  (DOVER)<br>* Seite 2, Zeilen 28 - 33; Figur 1 *<br>– – – | 1,4,10 | B 60 J 5/08 |
| Y | DE-A-3 725 380  (REFLEXA-WERKE)<br>* Spalte 8, Zeilen 18 - 25; Figuren 1, 2 *<br>– – – – – | 1 | |
| | | | **RECHERCHIERTE SACHGEBIETE (Int. Cl.5)**<br><br>B 60 J<br>E 06 B |

Der vorliegende Recherchenbericht wurde für alle Patentansprüche erstellt

| Recherchenort | Abschlußdatum der Recherche | Prüfer |
|---|---|---|
| Den Haag | 05 Juni 91 | FOGLIA A. |